# EUROPÄISCHE PATENTSCHRIFT

(11) **EP 4 248 148 B1**
(45) Veröffentlichungstag und Bekanntmachung des Hinweises auf die Patenterteilung: **31.12.2025**
(21) Anmeldenummer: 21810914.8
(22) Anmeldetag: 17.11.2021
(51) Int. Cl.: F24F 11/34, A62C 2/24, F24F 13/14

(54) **SYSTEM UND VERFAHREN ZUR BELÜFTUNG UND/ODER ZUM RAUCH- UND WÄRMEABZUG EINES GEBÄUDES**
SYSTEM AND METHOD FOR VENTILATING AND/OR DISCHARGING SMOKE AND HEAT FROM A BUILDING
SYSTÈME ET PROCÉDÉ DE VENTILATION ET/OU D'EXTRACTION DE FUMÉE ET DE CHALEUR D'UN BÂTIMENT

(30) Priorität: 18.11.2020 AT 603422020
(43) Veröffentlichungstag der Anmeldung: 27.09.2023
(73) Patentinhaber: Grasl Pneumatic - Mechanik Gesellschaft m.b.H., 3454 Reidling (AT)
(72) Erfinder: GRASL, Hartwig, 3443 Sieghartskirchen (AT)
(74) Vertreter: Babeluk Patentanwälte GmbH
(86) Internationale Anmeldenummer: PCT/AT2021/060434
(87) Internationale Veröffentlichungsnummer: WO 2022/104402

(56) Entgegenhaltungen:
- EP-A2- 1 731 770
- DE-A1- 10 049 631
- DE-A1- 19 627 738
- DE-C1- 3 627 727
- DE-U1- 29 602 536

## Beschreibung

Die Erfindung betrifft ein System zur Belüftung und/oder zum Rauch- und Wärmeabzug eines Gebäudes umfassend zumindest ein Rauch- und Wärmeabzugselement (RWA-Element) mit mindestens einer Betätigungseinrichtung und zumindest einer Druckleitung, die mit der Betätigungseinrichtung verbunden ist, wobei die Betätigungseinrichtung zumindest einen Thermoauslöser mit zumindest einem Ventil umfasst, wobei das Ventil einen Ventilraum aufweist, von dem eine Verbindung zur Druckleitung, eine Verbindung zu einer Öffnungsleitung des RWA-Elements und eine Verbindung zu einem Treibmittelbehälter führt, wobei im Ventilraum ein Ventilkörper vorgesehen ist.

Weiters betrifft die Erfindung ein dazugehöriges Verfahren zur Belüftung und/oder zum Rauch- und Wärmeabzug eines Gebäudes mit zumindest einem RWA-Element, das zur Öffnung und Schließung mindestens eine Betätigungseinrichtung aufweist und mit einem Alarmkasten über zumindest eine Druckleitung verbunden ist, wobei die Betätigungseinrichtung zumindest einen Thermoauslöser umfasst, der bei Erreichen einer Nenntemperatur mit einem Dorn einen Treibmittelbehälter ansticht.

RWA-Elemente sind beispielsweise als RWA-Klappe, als Fenster oder als Lichtbandelement oder Ähnliches ausgeführt. Sie dienen dazu im normalen Betrieb eine Lüftung zuzulassen. Im Brandfall können sie durch rechtzeitige Öffnung für den Rauchabzug sorgen. Damit können Fluchtwege für Personen und Tiere frei von Rauch gehalten werden. Ebenso kann dadurch die Gesundheitsgefahr reduziert werden, die Sicht wird verbessert und Panikreaktionen können verhindert werden. Weiters wird Wärme abgeführt und so ebenfalls die Gefahr und auch der angerichtete Schaden verringert. RWA-Elemente können auch im Zusammenspiel mit Druckbelüfter eingesetzt werden, und die günstigen Effekte können damit noch erhöht werden.

Unter Betätigungseinrichtung versteht sich hier der Thermoauslöser mit einem Pneumatikzylinder zur Öffnung und Schließung des RWA-Elements.

Aus der DE 100 49 631 A1 ist ein Pneumatikzylinder für die Öffnung einer Rauchund Wärmeabzugsklappe bekannt, der unter anderem einen Thermoauslöser mit Dorn zum Anstechen einer CO₂-Einwegflasche aufweist. Weiters weist der Pneumatikzylinder einen Druckluftanschluss für die Öffnung zur Lüftung auf. Bei Öffnung durch den Thermoauslöser wird der Pneumatikzylinder in der offenen Stellung gegen Verschließen verriegelt. Der Thermoauslöser wird derart realisiert, dass der Dorn mit einer Feder vorgespannt ist, wobei eine Glasampulle die Verschiebung des Dorns in Richtung CO₂-Flasche verhindert. Die Glasampulle zerspringt bei Überschreiten einer bestimmten Temperaturgrenze. Weitere ähnliche Systeme sind aus DE 296 02 536 U1, DE 36 27 727 C1 und DE 196 27 738 A1 bekannt. Alternativ zur Auslösung über einen Thermoauslöser ist üblicherweise die Auslösung über einen Handschalter im Alarmkasten möglich. Dabei strömt Druckgas über die Druckgasleitung zur Öffnungseinrichtung. Nachteilig an den üblichen Ausführungen ist, dass bei Auslösen des Thermoauslösers die Leitung für den Lüftungsbefehl oder Rauch- und Wärmeabzugsbefehl von dem Alarmkasten gesperrt ist. Bei einem Störungsfall am Thermoauslöser kann so die Rauch- und Wärmeabzugsklappe nicht ausgelöst werden.

Aufgabe der vorliegenden Erfindung ist es daher ein System anzugeben, durch den auch im Störungsfall bei fehlgeschlagener Auslösung durch den Thermoauslöser eine Öffnung des Rauch- und Wärmeabzugselements sichergestellt ist.

Diese Aufgabe wird durch das obige System und das obige Verfahren erfindungsgemäß dadurch gelöst, dass bei Auslösen des Thermoauslösers der Ventilkörper durch das Strömen von Treibmittel von dem Treibmittelbehälter in die Öffnungsleitung des RWA-Elements bewegbar ist und eine Verbindung zur Druckleitung durch den Ventilkörper verschließbar ist. Dadurch ist sichergestellt, dass erst bei richtiger Auslösung, funktionstüchtigem Treibmittelbehälter und richtig erfolgtem Öffnen des Treibmittelbehälters die Verbindung zur Druckleitung gesperrt wird. Dadurch kann bei einem Fehler, egal wie er geartet sein mag, weiterhin ein manueller Öffnungsbefehl ausgeführt werden. Das steigert die Ausfallsicherheit des Systems in sehr hohem Maß.

Weiters wird die Aufgabe durch ein dazugehöriges Verfahren gelöst, wobei nach Auslösen des Thermoauslösers bei Überschreiten der Nenntemperatur und bei fehlerhaftem Treibmittelbehälter oder anderer Fehlfunktion ein Öffnungsbefehl von dem Alarmkasten über die Druckleitung ausgeführt wird, dabei wird durch die Strömung eines Druckgases durch die Druckleitung eine Druckangriffsfläche zur Druckleitung des Ventilkörpers der Betätigungseinrichtung angeströmt und die Verbindung zu einer Öffnungsleitung hergestellt und das RWA-Element geöffnet. Dadurch entstehen die oben angeführten Vorteile zur Erhöhung der Sicherheit. Besonders günstig ist es, wenn der Thermoauslöser als Treibmittelbehälter für die Betätigungseinrichtung eine CO₂-Flasche - vorzugsweise eine CO₂-Einwegflasche - aufweist. Dadurch ist ein kostengünstiger Treibmittelbehälter gefunden, der nach Auslösen des Thermoauslösers einfach und unkompliziert ersetzt werden kann. Kohlendioxid ist für den Menschen ungiftig und wirkt bei einem Brand nicht fördernd. Daher ist der Einsatz von Kohlendioxid als Treibmittel für die Betätigungseinrichtung im Brandfall vorteilhaft.

Die Öffnung des Treibmittelbehälters kann auf besonders einfache Art und Weise bewerkstelligt werden, wenn der Thermoauslöser einen Dorn aufweist, der bei Überschreitung einer Nenntemperatur den Treibmittelbehälter anstechen kann.

Um einen Ventilkörper zu erhalten, der einerseits den Druckgaskreis für das Verschließen und den Druckgaskreis für das Öffnen des RWA-Elements voneinander getrennt hält, aber andererseits das Durchtreten des Treibmittels in die Öffnungsleitung gewährleistet, ist es günstig, wenn der Ventilkörper zumindest teilweise durch eine Strömung des Treibmittels biegbar ist und die Verbindung zwischen der Öffnungsleitung und dem Treibmittelbehälter durch Deformation des Ventilkörpers hergestellt wird.

Unter Biegsamkeit versteht sich hier eine geringe Biegesteifigkeit, die wiederum durch ein kleines Elastizitätsmodul und ein kleines Flächenträgheitsmoment bestimmt sind. Dabei verstehen sich hier unter biegsam vorzugsweise Materialien, die einen Elastizitätsmodul von weniger als 70.000 N/mm² aufweisen.

Besonders vorteilhaft ist es, wenn der Ventilkörper als Schnellentlüftungskolben, Kolbenschieber oder Kugel ausgeführt ist.

Die Biegsamkeit lässt sich insbesondere einfach bewerkstelligen, wenn der Ventilkörper als Gummikolben oder als ein Kunststoffkolben ausgeführt ist.

Eine besonders vorteilhafte Ausführung sieht vor, dass der Ventilkörper eine Druckangriffsfläche zum Treibmittelbehälter und eine Druckangriffsfläche zur Druckleitung aufweist, wobei die Druckangriffsfläche zum Treibmittelbehälter durch die Strömung des Treibmittels so verwölbt wird, dass die Verbindung zur Öffnungsleitung freigegeben wird und das Treibmittel am Ventilkörper - vorzugsweise an der verwölbten Druckangriffsfläche entlang - zur Öffnungsleitung strömt.

Der gleiche Vorteil entsteht, wenn der Ventilkörper bei Anstechen des Treibmittelbehälters und Ausströmen des Treibmittels durch die Anströmung einer Druckangriffsfläche durch das Treibmittel in Richtung der Druckleitung verschoben wird, und die Verbindung zur Druckleitung verschlossen wird und bei weiterer Anströmung der Ventilköper verwölbt wird, sodass Treibmittel in die Öffnungsleitung strömt und das RWA-Element öffnet, und dass vorzugsweise ein Kolbenschieber eine Verbindung zwischen Verschlussleitung und weiterer Druckleitung unterbricht.

Eine besonders einfache Anordnung und eine einfache Herstellung ergibt sich, wenn die Druckangriffsfläche zum Treibmittelbehälter am Ventilkörper gegenüber der Druckangriffsfläche zur Druckleitung angeordnet ist, wobei die Druckangriffsflächen im unverformten Zustand des Ventilkörpers bevorzugt im Wesentlichen parallel zueinander angeordnet sind.

Um eine höhere Sicherheit zu erreichen und die Verbindungsherstellung zwischen Treibmittelbehälter und Öffnungsleitung zu vereinfachen, ist es günstig, wenn die Druckangriffsfläche zur Druckleitung kleiner ist als die Druckangriffsfläche zum Treibmittelbehälter. Dadurch wird aufgrund gleicher angreifender Drücke, die auf den Ventilkörper wirkende Kraft durch das Druckgas vom Treibmittelbehälter verschoben oder an einen Anschlag gepresst.

Eine bessere Verbiegbarkeit des Ventilkörpers wird erreicht bei einer Ausführung, die vorsieht, dass zwischen der Druckangriffsfläche zur Druckleitung und der Druckangriffsfläche zum Treibmittelbehälter eine - vorzugsweise umlaufende - Kerbe angeordnet ist, die zur leichteren Verwölbung des Ventilkörpers angeordnet ist. Dies erhöht weiter die Sicherheit.

Eine einfachere Fertigung ergibt sich, wenn die Kerbe konzentrisch um die Druckangriffsfläche zur Druckleitung angeordnet ist.

Besonders vorteilhaft ist es, wenn vorgesehen ist, dass der Ventilkörper bei Strömung durch die Druckleitung in Richtung des Treibmittelbehälters verschiebbar ist und eine Verbindung mit der Öffnungsleitung herstellbar ist, wenn keine Strömung vom Treibmittelbehälter vorhanden ist. Dadurch ist auch durch eine einfach gestaltete Bewegung eine Verbindung herstellbar, mit einfachen Geometrien.

Um einen besonders zuverlässigen Thermoauslöser bereitzustellen, ist in einer besonders günstigen Ausführung vorgesehen, dass dieser zumindest eine Thermophiole umfasst und die Thermophiole die Feder mit einem Dorn vorspannt, wobei die Thermophiole bei Überschreiten der Nenntemperatur birst und der Dorn durch die Umwandlung der potentiellen Energie der Feder in kinetische Energie den Treibmittelbehälter ansticht. Durch die Feder ist das System besonders ausfallsicher, weil nur ein mechanisches Gebrechen zum Verlust der potenziellen Energie führen kann.

Eine einfache Konstruktion ergibt sich, wenn an den Ventilraum mit dem Ventilkörper zum Treibmittelbehälter hin angrenzend die Feder und konzentrisch dazu ein Kolbenschieber angeordnet sind.

Es ist günstig, wenn der Kolbenschieber einen Absatz aufweist, in die der Thermoauslöser - vorzugsweise eine Thermophiole - im nicht ausgelösten Zustand eingreift und eine Verschiebung in Richtung einer Federkraft verhindert. Der Absatz ist in einer besonders vorteilhaften Ausführung als Halteausnehmung als umlaufende Nut am Kolbenschieber angeordnet. Dadurch ist vor Auslösen des Thermoauslösers die Verschiebung des Kolbenschiebers entlang der Hochachse gesperrt.

Es ist günstig, wenn die Betätigungseinrichtung eine Verbindung zu einer Verschlussleitung und zu einer weiteren Druckleitung aufweist, wobei Verschlussleitung und Druckleitung durch den Kolbenschieber miteinander verbindbar sind. Dadurch kann einfach durch den Thermoauslöser auch auf die Verschlussleitung Einfluss genommen werden. Außerdem entsteht dadurch ein kompakteres System.

Es ist vorteilhaft, wenn der Kolbenschieber bei ausgelöstem Thermoauslöser - vorzugsweise bei geborstener Thermophiole - die Verschlussleitung und eine weitere Druckleitung voneinander trennt, sodass das RWA-Element gegen Verschließen gesperrt ist. Dadurch kann das RWA-Element bei einem Brandereignis oder einem ähnlichen Notfall bei Auslösen des Thermoauslösers nicht unbeabsichtigt geschlossen werden, beispielsweise durch ein terminiertes Lüftungsereignis.

Das System ist besonders ausfallsicher, wenn die zumindest eine Druckleitung - vorzugsweise zwei Druckleitungen - mit einem Alarmkasten verbunden ist, an dem Öffnungs- und Schließbefehle des RWA-Elements abgebbar sind. Diese Befehle können automatisch durch den Alarmkasten oder händisch abgebbar sein.

Des Weiteren wird die Erfindung anhand der beispielhaften Ausführung in den Figuren näher erläutert. Es zeigen:
- Fig. 1: einen Thermoauslöser eines erfindungsgemäßen Systems in einem Schnitt entlang einer Hochachse;
- Fig. 2: ein Ventilkörper des Thermoauslösers im Detail;
- Fig. 3: eine Seitenansicht des Thermoauslösers; und
- Fig. 4: eine Schrägansicht des Thermoauslösers.

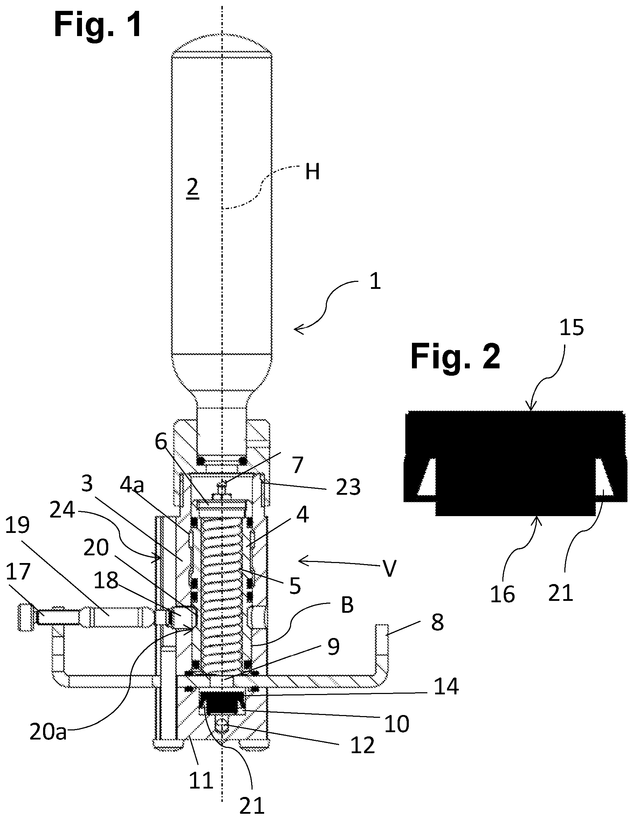

Fig. 1 zeigt einen Thermoauslöser 1 mit einer CO₂-Flasche 2, die als CO₂-Einweg-flasche ausgeführt ist. Dabei ist der Thermoauslöser 1 entlang einer Hochachse H geschnitten gezeigt.

Der Thermoauslöser 1 ist Bestandteil eines Systems zur Belüftung und/oder zum Rauch- und Wärmeabzug eines Gebäudes. Das System zur Belüftung und/oder zum Rauch- und Wärmeabzug weist in dieser Ausführung einen Alarmkasten auf, der über eine Druckleitung zur Weitergabe eines Öffnungsbefehls und über eine Druckleitung zur Weitergabe eines Schließbefehls mit einer Betätigungseinrichtung verbunden ist, wobei die Betätigungseinrichtung und ein RWA-Element ebenfalls Teil des System sind. Hier ist beispielsweise als RWA-Element eine RWA-Klappe vorgesehen. Es können alternativ auch Fenster oder Lichtbandelemente und Ähnliches vorgesehen sein.

Die Betätigungseinrichtung umfasst in der beispielhaften Ausführung den Thermoauslöser 1 und einen Pneumatikzylinder, z.B. einen doppeltwirkenden Pneumatikzylinder, der zum Öffnen und Schließen der RWA-Klappe dient. Der Thermoauslöser 1 weist einen Ventilblock 3 auf, der entlang der Hochachse H eine Bohrung B aufweist, in der ein Kolbenschieber 4 angeordnet ist. Innerhalb des Kolbenschiebers 4 ist eine Feder 5 angeordnet. Die Feder 5 und der Kolbenschieber 4 sind hier über ein Befestigungselement 6 kraftübertragend verbunden. Das Befestigungselement 6 ist hier in den Kolbenschieber 4 eingeschraubt und die Feder 5 liegt daran an. Auf der von der Feder 5 abgewandten Seite des Befestigungselement 6 ist ein Dorn 7 angeordnet, der zum Anstechen der CO₂-Flasche 2 vorgesehen ist. An dem vom Befestigungselement 6 abgewandten Ende der Feder 5 liegt die Feder 5 an einem Halteelement 8 an. Das Halteelement 8 besitzt ein Durchgangsloch 9, der den Durchtritt für Treibmittel von der Bohrung B in einen Ventilraum 10 ermöglicht.

Der Dorn 7 kann alternativ auch Teil des Kolbenschiebers 4 sein, wobei kein Befestigungselement 6 nötig ist. Dabei übernimmt der Kolbenschieber 4 die Aufgabe des Befestigungselements 6 und ist mit dem Bereich für das Anliegen und Angreifen der Feder 5 einteilig ausgeführt.

Der Ventilraum 10 ist eine Ausnehmung in einem Ventilblockdeckel 11. Der Ventilblockdeckel 11 ist mit mehreren Schrauben am Ventilblock 3 befestigt ist und fixiert dabei das Haltelement 8. Vom Ventilraum 10 geht in Richtung der Hochachse H von der CO₂-Flasche 2 weg eine Verbindung 12 zur Druckleitung zur Weitergabe des Öffnungsbefehls ab. Eine Öffnungsleitung 13a zum RWA-Element, der RWA-Klappe geht ebenfalls vom Ventilraum 10 aus ab. Die Verbindung 12 zur Druckleitung geht dabei hier als Bohrung konzentrisch von der Hochachse H aus und weist einen etwa 90°Knick zu einer Bohrung zu einem Druckgasanschluss 22a für die Druckleitung auf, die in radialer Richtung angeordnet ist. Die Öffnungsleitung 13a geht an einem größeren Radius von der Hochachse H entfernt in Richtung des Radius vom Ventilraum 10 aus. Dabei ist unter dem Radius die Richtung des Radius der zylinderförmigen Ausnehmung des Ventilraums 10 zu verstehen, wobei die Drehachse der zylinderförmigen Ausnehmung hier mit der Hochachse H zusammenfällt.

Im Ventilraum 10 ist ein Ventilkörper 14 angeordnet, der in Richtung der Hochachse H verschiebbar ist. Dieser Ventilkörper 14 ist hier als Schnellentlüftungskolben und aus Gummi ausgeführt. Alternativ sind auch Ventilkörper aus Metall oder Kunststoff möglich. Auch ein Kolbenschieber kann alternativ zum Schnellentlüftungskolben als Ventilkörper eingesetzt werden. Dabei eignen sich vor allem Kunststoff und Metall als Materialien. Darüber hinaus ist die Verwendung einer Kugel als Ventilkörper möglich. Hier eignen sich Gummi, Kunststoff und Metall.

Wenn der Ventilkörper 14 am Halteelement 8 anliegt, ist ein Durchströmen des Ventilraums 10 von der Verbindung 12 zu der Öffnungsleitung 13a möglich. Wenn der Ventilkörper 14 von dem Halteelement 8 entfernt am Ventilblockdeckel 11 anliegt, so ist die Verbindung 12 zur Druckleitung verschlossen durch den Ventilkörper 14. Dabei weist der Ventilkörper 14 eine Druckangriffsfläche 15 zum Treibmittelbehälter auf. Weiters weist der Ventilkörper 14 eine Druckangriffsfläche 16 zur Druckleitung auf. Die Druckangriffsfläche 15 zur CO₂-Flasche 2 als Treibmittelbehälter ist dabei größer ausgeführt als die Druckangriffsfläche 16 zur Druckleitung. Dies dient dazu, dass durch gleiche angreifende Drücke zur Druckleitung und zur CO₂-Flasche hin eine größere Kraft auf den Ventilkörper 14 von der Druckangriffsfläche 15 zum Treibmittelbehälter hinwirkt. Dadurch wird eine Verschiebung in Richtung des Ventilblockdeckels 11 leichter erwirkt als eine Verschiebung in die entgegengesetzte Richtung.

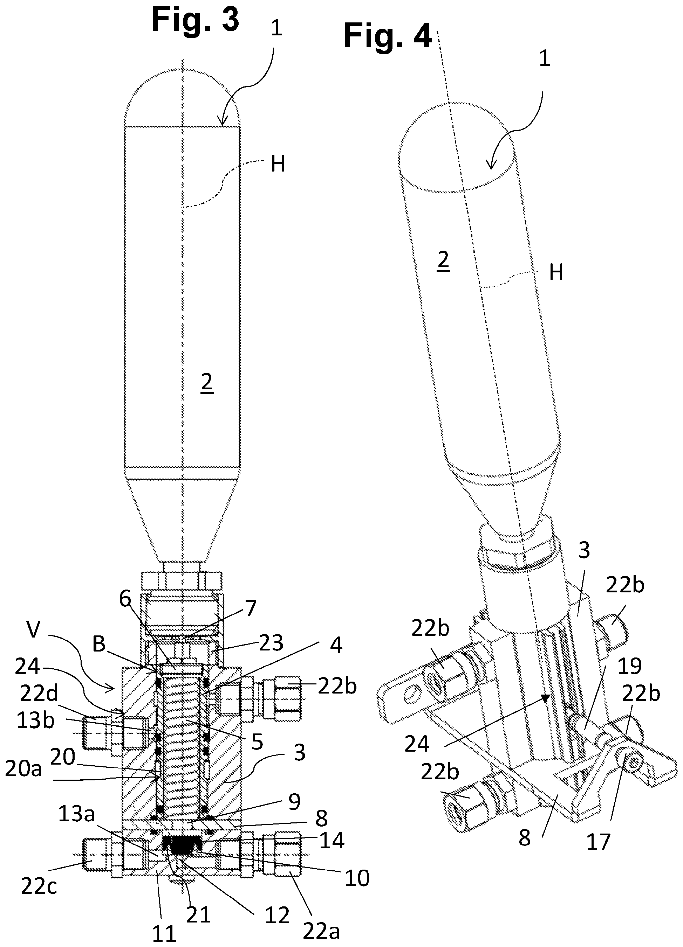

Das Halteelement 8 hält zwischen einer Schraube 17 und einem Stift 18 eine Thermophiole 19 eingespannt. Dabei greift der Stift 18 in eine Halteausnehmung 20 ein, die ihrerseits wiederum am Kolbenschieber 4 verortet ist. Die Halteausnehmung 20 ist, wie in Fig. 1 und Fig. 3 erkennbar ist, als umlaufende Nut gebildet. Mit dem Eingriff in diese Halteausnehmung 20 wird die Bewegung des Kolbenschiebers 4 entlang der Kraft durch die Feder 5 verhindert. Die Halteausnehmung 20 bildet damit einen Absatz 20a aus, der die Verschiebung in Richtung der Feder verhindert.

In Fig. 2 ist der Ventilkörper 14 im Detail gezeigt. Dieser ist als Drehkörper um die Hochachse H ausgebildet. Es ist erkennbar, dass die Druckangriffsfläche 15 zum Treibmittelbehälter größer ist als die Druckangriffsfläche 16 zur Druckleitung. Außerdem weist der Ventilkörper 14 eine umlaufende Kerbe 21 auf, die konzentrisch zur Druckangriffsfläche 16 zur Druckleitung angeordnet ist. Diese Kerbe 21 sorgt für leichteres Verwölben der Druckangriffsfläche 15. Dabei verwölbt sich die Druckangriffsfläche zur Öffnungsleitung 13a hin und gibt den Weg durch den Ventilraum 10 für die Strömung vom Treibmittelbehälter frei.

Die Bauteile Ventilblock 3, Ventilblockdeckel 11, Ventilkörper 14, und Kolbenschieber 4 bilden eine Baugruppe, die hier als Ventil V bezeichnet wird, weiters sind von dieser Baugruppe auch nicht näher beschriebene Dichtungen umfasst.

Am Ventilblock 3 und am Ventilblockdeckel 11 sind Druckgasanschlüsse 22a bis 22d vorgesehen. Der Druckgasanschluss 22a ist für die Druckleitung zum Öffnen des RWA-Elements beziehungsweise zur Weitergabe des Öffnungsbefehls vorgesehen. Ein weiterer Druckgasanschluss 22b ist für die Druckleitung zum Verschließen beziehungsweise zur Weitergabe des Schließbefehls vorgesehen. Als Ausgänge sind die Druckgasanschlüsse 22c für die Öffnungsleitung 13a und 22d für eine Verschlussleitung 13b vorgesehen. Ein Gasflaschenanschluss 23 verbindet den Ventilblock 3 mit dem Treibmittelbehälter, der CO₂-Flasche 2.

Die Verschlussleitung 13b und die Druckleitung zur Ausführung eines Schließbefehls werden über den Kolbenschieber 4 verbunden. Dazu sind im Ventilblock 3 und am Kolbenschieber 4 korrespondierende Nuten 4a angeordnet. Je nach Stellung des Kolbenschiebers 4 im Ventilblock 3 ist eine Strömung von der Druckleitung zur Verschlussleitung 13b möglich. Alternativ können anstatt von Nuten 4a auch Einstiche im Kolbenschieber vorgesehen sein, die die Strömung ermöglichen.

Zur Erklärung der Funktionsweise des Thermoauslösers 1 befindet sich der Thermoauslöser 1 ursprünglich in einer gesperrten Stellung, in der die Thermophiole 19 intakt ist und eingespannt zwischen Schraube 17 und Stift 18 in die Halteausnehmung 20 eingreift. Dadurch ist die Feder 5 vorgespannt. Es besteht eine durchgehende Verbindung zwischen dem Druckgasanschluss 22d zur Verschlussleitung 13b und dem Druckgasanschluss 22b zur Druckleitung zu einer Druckgasquelle.

Der Ventilkörper 14 ist im Ventilraum 10 zum Haltelement 8 frei verschiebbar. Wird nun an einem mit den Druckleitungen verbundenen Alarmkasten oder einer ähnlichen Einrichtung ein Öffnungsbefehl gegeben, beispielsweise über einen Drücker wird über die Druckleitung zur Weitergabe des Öffnungsbefehls Druckgas beispielsweise Druckluft zum Druckgasanschluss 22a des Ventils V geleitet. Der Ventilkörper 14 wird an das Halteelement 8 gedrückt und die Druckangriffsfläche 16 gibt den Weg frei. Das Druckgas strömt im Ventilraum 10 zu der Öffnungsleitung 13a über den Druckgasanschluss 22b. Von dort strömt das Druckgas weiter in den Pneumatikzylinder der Betätigungseinrichtung und öffnet damit das RWA-Element.

Wird ein Schließbefehl abgegeben, wird vom Alarmkasten oder einer ähnlichen Einrichtung Druckgas über die zweite Druckleitung zur Weitergabe von Schließbefehlen zum Ventil V geleitet. Dort tritt das Druckgas über den Druckgasanschluss 22b in das Ventil V ein, strömt über Nuten in Kolbenschieber 4 und Ventiblock 3 zum Druckgasanschluss 22d der mit der Verschlussleitung 13b verbunden ist. Das Druckgas strömt zum beispielsweise doppeltwirkenden Pneumatikzylinder und führt zum Schließen des RWA-Elements.

Ist nun im Gebäude oder dem Bereich des Thermoauslösers 1 die Umgebungstemperatur erhöht und überschreitet die Nenntemperatur, birst die Thermophiole 19 und der Stift 18 ist hier frei für Bewegung in Richtung der Hochachse H, wobei in Alternativen Ausführung, eine andere Orientierung möglich ist. Der Stift 18 ist hier entlang einer Schiene 24 verschiebbar, wie in Fig. 4 erkennbar ist. Der Kolbenschieber 4 ist nun auch entlang der Hochachse H verschiebbar und wird durch die Kraft der Feder 5 in Richtung der CO₂-Flasche 2 verschoben und der Dorn 7 sticht die CO₂-Flasche 2 an und CO₂ tritt als Treibmittel aus, strömt durch Bohrungen oder Ausnehmungen im Befestigungselement 6 oder des Kolbenschiebers 4 vorzugsweise rund um den Dorn 7, weiter durch den Innenraum des Kolbenschiebers 4 bei der Feder 5 hindurch. Weiters strömt das Treibmittel durch das Durchgangsloch 9 im Halteelement 8 und in den Ventilraum 10. Durch die Strömung verschiebt sich der Ventilkörper 14 in Richtung des Ventilblockdeckels 11 und verschließt dabei die Verbindung 12 zur Druckleitung zur Weitergabe des Öffnungsbefehls.

Das Treibmittel strömt über den Ventilraum 10 und strömt die Druckangriffsfläche 15 an. Durch die größere Fläche der Druckangriffsfläche 15 und die größeren vorherrschenden Drücke als in der Druckleitung wird der Ventilkörper 15 selbst bei vorherrschender Strömung von der Druckleitung her zum Verschließen der Verbindung 12 zur Druckleitung gezwungen. Somit kann bei intakter Auslösung durch den Thermoauslöser 1 kein Druckgas von der Druckleitung nach Auslösung beim Alarmkasten der Betätigungseinrichtung zugeführt werden.

Der Ventilkörper 15 verwölbt sich in Richtung Kerbe 21 und gibt den Weg zur Öffnungsleitung 13a frei. Der Pneumatikzylinder wird mit Treibmittel gefüllt und öffnet das RWA-Element zum Rauch- und Wärmeabzug.

Durch die Verschiebung des Kolbenschiebers 4 mit der Feder 5 im Ventilblock 3 ist auch die Verbindung Verschlussleitung 13b-Druckleitung unterbrochen. Ein Schließbefehl kann nicht ausgeführt werden.

Ist nun aufgrund eines irgendwie gearteten Fehlers eine Auslösung des Thermoauslösers 1 trotz Überschreiten der Nenntemperatur nicht richtig vollzogen worden, so ist über den Alarmkasten ein Öffnungsbefehl abgebbar. Die Druckleitung zum Druckgasanschluss 22a führt Druckgas, hebt den Ventilkörper 14 in Richtung der Hochachse H an, strömt zum Druckgasanschluss 22c über die Öffnungsleitung 13a, füllt den Pneumatikzylinder und öffnet damit das RWA-Element.

Vorteilhafterweise kann der Alarmkasten im Notfall händisch oder automatisch über Brandmelder oder Ähnliches ausgelöst werden. Damit wird eine Öffnung zumindest auf zwei verschiedene Arten garantiert. Die Wahrscheinlichkeit eines Versagens des Systems wird damit auf ein Minimum reduziert.

Zum Ausführen eines Schließbefehls nach Auslösen des Thermoauslösers 1 muss eine neue Thermophiole 19 und ein neuer Treibmittelbehälter eingesetzt werden. Dabei wird die Feder 5 wieder gespannt und der Kolbenschieber 4 verbindet wieder Druckgasanschluss 22b zur Druckleitung zur Weitergabe der Schließbefehle mit Druckgasanschluss 22d zur Verschlussleitung 13b.

## Patentansprüche

1. System zur Belüftung und/oder zum Rauch- und Wärmeabzug eines Gebäudes umfassend zumindest ein Rauch- und Wärmeabzugselement (RWA-Element) mit mindestens einer Betätigungseinrichtung und zumindest einer Druckleitung, die mit der Betätigungseinrichtung verbunden ist, wobei die Betätigungseinrichtung zumindest einen Thermoauslöser (1) mit zumindest einem Ventil (V) umfasst, wobei das Ventil (V) einen Ventilraum (10) aufweist, von dem eine Verbindung (12) zur Druckleitung, eine Verbindung zu einer Öffnungsleitung (13a) des RWA-Elements und eine Verbindung zu einem Treibmittelbehälter führt, wobei im Ventilraum (10) ein Ventilkörper (14) vorgesehen ist, wobei bei Auslösen des Thermoauslöser (1) der Ventilkörper (14), durch das Strömen von Treibmittel von dem Treibmittelbehälter in die Öffnungsleitung (13a) des RWA-Elements, bewegbar ist und eine Verbindung (12) zur Druckleitung durch den Ventilkörper (14) verschließbar ist, und des Weiteren eine Feder (5) sowie ein Kolbenschieber (4) vorgesehen sind, **dadurch gekennzeichnet, dass** an den Ventilraum (10) mit dem Ventilkörper (14) zur Verbindung zum Treibmittelbehälter hin angrenzend die Feder (5) und konzentrisch dazu ein Kolbenschieber (4) angeordnet sind.

2. System nach Anspruch 1, **dadurch gekennzeichnet, dass** der Thermoauslöser (1) als Treibmittelbehälter für die Betätigungseinrichtung eine CO₂-Flasche (2) - vorzugsweise eine CO₂-Einwegflasche - aufweist.

3. System nach Anspruch 1 oder 2, **dadurch gekennzeichnet, dass** der Thermoauslöser (1) einen Dorn (7) aufweist, der bei Überschreitung einer Nenntemperatur den Treibmittelbehälter ansticht.

4. System nach einem der Ansprüche 1 bis 3, **dadurch gekennzeichnet, dass** der Ventilkörper (14) zumindest teilweise durch eine Strömung des Treibmittels biegbar ist und die Verbindung zwischen der Öffnungsleitung (13a) und dem Treibmittelbehälter durch Deformation des Ventilkörpers (14) hergestellt wird.

5. System nach einem der Ansprüche 1 bis 4, **dadurch gekennzeichnet, dass** der Ventilkörper (14) als Schnellentlüftungskolben, Kolbenschieber, Kugel, Gummikolben oder als ein Kunststoffkolben ausgeführt ist.

6. System nach Anspruch 5, **dadurch gekennzeichnet, dass** der Ventilkörper (14) eine Druckangriffsfläche (15) zum Treibmittelbehälter und eine Druckangriffsfläche (16) zur Druckleitung aufweist, wobei die Druckangriffsfläche (15) zum Treibmittelbehälter durch die Strömung des Treibmittels so verwölbbar ist, dass die Verbindung zur Öffnungsleitung (13a) freigebbar ist und das Treibmittel am Ventilkörper (14) - vorzugsweise an der verwölbten Druckangriffsfläche (15) entlang - zur Öffnungsleitung (13a) strömbar ist, wobei bevorzugterweise die Druckangriffsfläche (15) zum Treibmittelbehälter am Ventilkörper (14) gegenüber der Druckangriffsfläche (16) zur Druckleitung angeordnet ist, wobei die Druckangriffsflächen (15, 16) im unverformten Zustand des Ventilkörpers (14) bevorzugt im Wesentlichen parallel zueinander angeordnet sind.

7. System nach Anspruch 6, **dadurch gekennzeichnet, dass** die Druckangriffsfläche (16) zur Druckleitung kleiner ist als die Druckangriffsfläche (15) zum Treibmittelbehälter, und wobei bevorzugterweise zwischen der Druckangriffsfläche (16) zur Druckleitung und der Druckangriffsfläche (15) zum Treibmittelbehälter eine - vorzugsweise umlaufende - und besonders bevorzugt konzentrisch um die Druckangriffsfläche (16) zur Druckleitung angeordnete - Kerbe (21) angeordnet ist, die zur leichteren Verwölbung des Ventilkörpers (14) angeordnet ist.

8. System nach einem der Ansprüche 1 bis 7, **dadurch gekennzeichnet, dass** der Ventilkörper (14) bei Strömung durch die Druckleitung in Richtung des Treibmittelbehälters verschiebbar ist und eine Verbindung mit der Öffnungsleitung (13a) herstellbar ist, wenn keine Strömung vom Treibmittelbehälter vorhanden ist.

9. System nach einem der Ansprüche 1 bis 8, **dadurch gekennzeichnet, dass** der Thermoauslöser (1) zumindest eine Thermophiole (19) umfasst und die Thermophiole (19) die Feder (5) mit einem Dorn (7) vorspannt, sodass die Thermophiole (19) bei Überschreiten der Nenntemperatur birst und der Dorn (7) durch die Umwandlung der potentiellen Energie der Feder (5) in kinetische Energie den Treibmittelbehälter ansticht.

10. System nach Anspruch 9, **dadurch gekennzeichnet, dass** der Kolbenschieber (4) einen Absatz aufweist in die der Thermoauslöser - vorzugsweise eine Thermophiole (19) - im nicht ausgelösten Zustand eingreift und eine Verschiebung in Richtung einer Federkraft verhindert.

11. System nach einem der Ansprüche 1 bis 10, **dadurch gekennzeichnet, dass** die Betätigungseinrichtung eine Verbindung zu einer Verschlussleitung (13b) und zu einer weiteren Druckleitung aufweist, wobei Verschlussleitung (13b) und Druckleitung durch den Kolbenschieber (4) miteinander verbindbar sind.

12. System nach Anspruch 11, **dadurch gekennzeichnet, dass** der Kolbenschieber (4) bei ausgelöstem Thermoauslöser (1) - vorzugsweise bei geborstener Thermophiole (19) - die Verschlussleitung (13b) und eine weitere Druckleitung voneinander trennt, sodass das RWA-Element gegen Verschließen gesperrt ist.

13. System nach einem der Ansprüche 1 bis 12, **dadurch gekennzeichnet, dass** die zumindest eine Druckleitung - vorzugsweise zwei Druckleitungen - mit einem Alarmkasten verbunden ist, an dem Öffnungs- und Schließbefehle des RWA-Elements abgebbar sind.

14. Verfahren zur Belüftung und/oder zum Rauch- und Wärmeabzug eines Gebäudes mit zumindest einem RWA-Element, das zur Öffnung und Schließung mindestens eine Betätigungseinrichtung aufweist und mit einem Alarmkasten über zumindest eine Druckleitung verbunden ist, wobei die Betätigungseinrichtung zumindest einen Thermoauslöser (1) umfasst, der bei Erreichen einer Nenntemperatur mit einem Dorn (7) einen Treibmittelbehälter ansticht, **dadurch gekennzeichnet, dass** nach Auslösen des Thermoauslösers (1) bei Überschreiten der Nenntemperatur und bei fehlerhaftem Treibmittelbehälter oder anderer Fehlfunktion ein Öffnungsbefehl von dem Alarmkasten über die Druckleitung ausgeführt wird, dabei wird durch die Strömung eines Druckgases durch die Druckleitung eine Druckangriffsfläche (16) zur Druckleitung des Ventilkörpers (14) der Betätigungseinrichtung angeströmt und die Verbindung zu einer Öffnungsleitung (13a) hergestellt und das RWA-Element geöffnet.

15. Verfahren nach Anspruch 14, **dadurch gekennzeichnet, dass** der Ventilkörper (14) bei Anstechen des Treibmittelbehälters und Ausströmen des Treibmittels durch die Anströmung einer Druckangriffsfläche (15) durch das Treibmittel in Richtung der Druckleitung verschoben wird und die Verbindung (12) zur Druckleitung verschlossen wird und bei weiterer Anströmung der Ventilköper (14) verwölbt wird, sodass Treibmittel in die Öffnungsleitung (13a) strömt und das RWA-Element öffnet und dass - vorzugsweise ein Kolbenschieber (4) eine Verbindung zwischen Verschlussleitung (13b) und weiterer Druckleitung unterbricht.

## Claims

1. System for ventilating and/or extracting smoke and heat from a building, comprising at least one smoke and heat extraction element (SHE element) having at least one actuating device and at least one pressure line connected to the actuating device, wherein the actuating device comprises at least one thermal tripping device (1) having at least one valve (V), wherein the valve (V) has a valve chamber (10) from which a connection (12) leads to the pressure line, a connection to an opening line (13a) of the smoke and heat extraction element and a connection to a propellant container, wherein a valve body (14) is provided in the valve chamber (10), wherein, when the thermal tripping device (1) is triggered, the valve body (14) can be moved by the flow of propellant from the propellant container into the opening line (13a) of the smoke and heat extraction element, and a connection (12) to the pressure line can be closed by the valve body (14), and further a spring (5) and a piston slide (4) are provided, **characterised in that** the spring (5) and, concentrically thereto, a piston slide (4) are arranged adjacent to the valve chamber (10) with the valve body (14) for connection to the propellant container.

2. System according to claim 1, **characterised in that** the thermal tripping device (1) has a CO₂ cylinder (2) - preferably a disposable CO₂ cylinder - as the propellant container for the actuating device.

3. System according to claim 1 or 2, **characterised in that** the thermal tripping device (1) has a spike (7) which pierces the propellant container when a nominal temperature is exceeded.

4. System according to one of claims 1 to 3, **characterised in that** the valve body (14) can be bent at least partially by a flow of the propellant and the connection between the opening line (13a) and the propellant container is established by deformation of the valve body (14).

5. System according to one of claims 1 to 4, **characterised in that** the valve body (14) is designed as a quick-release piston, piston slide, ball, rubber piston, or plastic piston.

6. System according to claim 5, **characterised in that** the valve body (14) has a pressure contact surface (15) for the propellant container and a pressure contact surface (16) to the pressure line, wherein the pressure contact surface (15) to the propellant container can be bulged by the flow of the propellant in such a way that the connection to the opening line (13a) can be released and the propellant can flow at the valve body (14) - preferably along the bulged pressure contact surface (15) - to the opening line (13a), wherein the pressure contact surface (15) to the propellant container on the valve body (14) is preferably arranged opposite the pressure contact surface (16) to the pressure line, wherein the pressure contact surfaces (15, 16) are preferably arranged substantially parallel to each other in the undeformed state of the valve body (14).

7. System according to claim 6, **characterised in that** the pressure contact surface (16) for the pressure line is smaller than the pressure contact surface (15) to the propellant container, and wherein a notch (21) which is arranged for easier bulging of the valve body (14) and is preferably circumferential and particularly preferably arranged concentrically around the pressure contact surface (16) to the pressure line is arranged preferably between the pressure contact surface (16) to the pressure line and the pressure contact surface (15) to the propellant container.

8. System according to one of claims 1 to 7, **characterised in that** the valve body (14) can be moved in the direction of the propellant container when flow is present in the pressure line and a connection can be established with the opening line (13a) when there is no flow from the propellant container.

9. System according to one of claims 1 to 8, **characterised in that** the thermal tripping device (1) comprises at least one thermo vial (19) and the thermo vial (19) preloads the spring (5) with a spike (7) so that the thermo vial (19) bursts when the nominal temperature is exceeded and the spike (7) pierces the propellant container by converting the potential energy of the spring (5) into kinetic energy.

10. System according to claim 9, **characterised in that** the piston slide (4) has a shoulder into which the thermal tripping device - preferably a thermo vial (19) - engages in the non-triggered state and prevents displacement in the direction of a spring force.

11. System according to one of claims 1 to 10, **characterised in that** the actuating device has a connection to a shut-off line (13b) and to a further pressure line, wherein the shut-off line (13b) and the pressure line can be connected to each other by the piston slide (4).

12. System according to claim 11, **characterised in that,** when the thermal tripping device (1) is triggered - preferably when the thermo vial (19) bursts - the piston slide (4) separates the shut-off line (13b) and a further pressure line from each other, so that the smoke and heat extraction element is blocked against closing.

13. System according to one of claims 1 to 12, **characterised in that** the at least one pressure line - preferably two pressure lines - is connected to an alarm box at which opening and closing commands for the smoke and heat extraction element can be issued.

14. Method for ventilating and/or extracting smoke and heat from a building, comprising at least one smoke and heat extraction element, which has at least one actuating device for opening and closing and is connected to an alarm box via at least one pressure line, wherein the actuating device comprises at least one thermal tripping device (1) which, when a nominal temperature is reached, pierces a propellant container with a spike (7), **characterised in that,** after the thermal tripping device (1) is triggered when the nominal temperature is exceeded and in the event of a faulty propellant container or other malfunction, an opening command is executed by the alarm box via the pressure line, and in this process the flow of a pressurized gas through the pressure line flows against a pressure contact surface (16) to the pressure line of the valve body (14) of the actuating device, establishing a connection to an opening line (13a) and opening the smoke and heat exhaust extraction element.

15. Method according to claim 14, **characterised in that** when the propellant container is pierced and the propellant flows out, the valve body (14) is displaced in the direction of the pressure line due to the flow against a pressure contact surface (15), and the connection (12) to the pressure line is closed and, with further inflow, the valve body (14) is bulged so that propellant flows into the opening line (13a) and opens the smoke and heat extraction element, and **in that** preferably a piston slide (4) interrupts a connection between the shut-off line (13b) and a further pressure line.

## Revendications

1. Système de ventilation et/ou d'extraction de fumée et de chaleur d'un bâtiment comprenant au moins un élément (élément RWA) d'extraction de fumée et de chaleur comprenant au moins un dispositif d'actionnement et au moins un conduit sous pression, qui communique avec le dispositif d'actionnement, dans lequel le dispositif d'actionnement comprend au moins un thermodéclencheur (1) ayant au moins une soupape (V), dans lequel la soupape (V) a une chambre (10) de soupape, de laquelle part une communication (12) vers le conduit sous pression, une communication vers un conduit (13a) d'ouverture de l'élément RWA et une communication vers un premier récipient d'agent propulseur, dans lequel dans la chambre (10) de la soupape est prévu un corps (14) de soupape, dans lequel, lorsque le thermodéclencheur (1) se déclenche, le corps (14) de soupape peut se déplacer par l'écoulement de l'agent propulseur du récipient d'agent propulseur dans le conduit (13a) d'ouverture de l'élément RWA et une communication (12) avec le conduit sous pression peut être fermée par le corps (14) de soupape et en outre il est prévu un ressort (5) ainsi qu'un tiroir (4) à piston, **caractérisé en ce que** sur la chambre (10) de la soupape sont montés le ressort (5) contigu au corps (14) de la soupape pour la communication avec le récipient d'agent propulseur et concentriquement à cela un tiroir (4) à piston.

2. Système suivant la revendication 1, **caractérisé en ce que** le thermo déclencheur (1) a, comme récipient d'agent propulseur du dispositif d'actionnement, une bouteille (2) de CO₂, de préférence une bouteille de CO₂ à jeter après usage.

3. Système suivant la revendication 1 ou 2, **caractérisé en ce que** le thermo déclencheur (1) a un mandrin (7), qui, si une température nominale est dépassée, perce le récipient d'agent propulseur.

4. Système suivant l'une des revendications 1 à 3, **caractérisé en ce que** le corps (14) de la soupape peut être bombé au moins en partie par un écoulement de l'agent propulseur et la communication entre le conduit (13a) d'ouverture et le récipient d'agent propulseur est ménagée par une déformation du corps (14) de la soupape.

5. Système suivant l'une des revendications 1 à 4, **caractérisé en ce que** le corps (14) de la soupape est réalisé sous la forme d'un piston à ventilation rapide, d'un robinet à piston, d'une bille, d'un piston en caoutchouc ou d'un piston en matière plastique.

6. Système suivant la revendication 5, **caractérisé en ce que** le corps (14) de la soupape a une surface (15) d'attaque de la pression vers le récipient d'agent propulseur et une surface (16) d'attaque de la pression vers le conduit sous pression, dans lequel la surface (15) d'attaque de la pression vers le récipient d'agent propulseur peut être bombée par l'écoulement de l'agent propulseur de manière à pouvoir libérer la communication avec le conduit (13a) d'ouverture et **en ce que** l'agent propulseur peut, au corps (14) de la soupape - de préférence suivant la surface (15) d'attaque de la pression bombée, s'écouler vers le conduit (13a) d'ouverture, dans lequel, de préférence, la surface (15) d'attaque de la pression vers le récipient d'agent propulseur est disposée sur le corps (14) de la soupape en face de la surface (16) d'attaque de la pression vers le conduit sous pression, dans lequel les surfaces (15, 16) d'attaque de la pression sont, dans l'état non déformé du corps (14) de la soupape, de préférence sensiblement parallèles entre elles.

7. Système suivant la revendication 6, **caractérisé en ce que** la surface (16) d'attaque de la pression vers le conduit sous pression est plus petite que la surface (15) d'attaque de la pression vers le récipient d'agent propulseur et dans lequel, de préférence, entre la surface (16) d'attaque de la pression vers le conduit sous pression et la surface (15) d'attaque de la pression vers le récipient d'agent propulseur est disposée une encoche (21) - de préférence faisant le tour - et d'une manière particulièrement préférée, concentriquement autour de la surface (16) d'attaque de la pression vers le conduit sous pression, encoche qui est disposée pour faciliter le bombement du corps (14) de la soupape.

8. Système suivant l'une des revendications 1 à 7, **caractérisé en ce que** le corps (14) de la soupape peut être déplacé lors de l'écoulement dans le conduit sous pression dans la direction du récipient d'agent propulseur et une communication avec le conduit (13a) d'ouverture peut être ménagée s'il n'y a pas d'écoulement à partir du récipient d'agent propulseur.

9. Système suivant l'une des revendications 1 à 8, **caractérisé en ce que** le thermodéclencheur (1) comprend au moins une thermophiole (19) et la thermophiole (19) tend le ressort (5) par un mandrin (7), de manière à ce que la thermophiole (19) éclate si la température nominale est dépassée et de manière à ce que le mandrin (7), par la transformation de l'énergie potentielle du ressort (5) en énergie cinétique, perce le récipient d'agent propulseur.

10. Système suivant la revendication 9, **caractérisé** en ce robinet (4) à piston a un ressort, dans lequel le thermodéclencheur - de préférence une thermophiole (19) - pénètre à l'état non déclenché et empêche un déplacement dans le sens d'une force de ressort.

11. Système suivant l'une des revendications 1 à 10, **caractérisé en ce que** le dispositif d'actionnement à une communication avec un conduit (13b) de fermeture et avec un autre conduit sous pression, dans lequel le conduit (13b) de fermeture et le conduit sous pression peuvent communiquer entre eux par le robinet (4) à piston.

12. Système suivant la revendication 11, **caractérisé en ce que** le robinet (4) à piston sépare, lorsque le thermodéclencheur (1) est déclenché - de préférence lorsque la thermophiole (19) a éclaté - le conduit (13b) de fermeture et un autre conduit sous pression l'un de l'autre de sorte que l'élément RWA est empêché de se fermer.

13. Système suivant l'une des revendications 1 à 12, **caractérisé en ce qu'**au moins un conduit sous pression - de préférence deux conduits sous pression - est relié à une caisse d'alerte, à laquelle des instructions d'ouverture et de fermeture de l'élément RWA peuvent être données.

14. Procédé de ventilation et/ou d'extraction de fumée et de chaleur d'un bâtiment ayant au moins un élément RWA, qui a, pour l'ouverture et la fermeture, au moins un dispositif d'actionnement, et qui est relié à une caisse d'alerte par au moins un conduit sous pression, dans lequel le dispositif d'actionnement comprend au moins un thermodéclencheur (1), qui, lorsqu'une température nominale est atteinte, perce un récipient d'agent propulseur par un mandrin (7), **caractérisé en ce qu'**après le déclenchement du thermodéclencheur (1), si la température nominale est dépassée et si le récipient d'agent propulseur est défectueux ou s'il y a un autre fonctionnement défectueux, une instruction d'ouverture est, par la caisse d'alerte en passant par le conduit sous pression, exécutée à cet effet, par l'écoulement d'un gaz sous pression dans le conduit sous pression une surface (16) d'attaque de la pression vers le conduit sous pression du corps (14) de la soupape du dispositif d'actionnement est parcouru et la communication avec un conduit (13a) d'ouverture est établi et l'élément RWA est ouvert.

15. Procédé suivant la revendication 14, **caractérisé en ce que** le corps (14) de la soupape, lorsque le récipient d'agent propulseur est percé et lors de la sortie de l'agent propulseur par l'écoulement sur une surface (15) d'attaque de la pression de l'agent fluide propulseur en direction du conduit sous pression, est déplacé et la communication (12) vers le conduit sous pression est fermée et lorsque l'écoulement continue, le corps (14) de la soupape est bombé de sorte que de l'agent propulseur s'écoule dans le conduit (13a) d'ouverture et que l'élément RWA s'ouvre et **en ce que** - de préférence un robinet (4) à piston interrompt une communication entre un conduit (13b) de fermeture et un autre conduit sous pression.
